# EUROPEAN PATENT APPLICATION

(11) **EP 3 982 314 A1**
(43) Date of publication of application: **13.04.2022**
(21) Application number: 19950794.8
(22) Date of filing: 02.11.2019
(51) Int. Cl.: G06Q 10/10, G06Q 10/00

(54) **METHOD AND SYSTEM FOR PROVIDING PORTABLE RESUME**

(71) Applicant: Gamania Digital Entertainment Co., Ltd., 11494 Taipei City (TW)
(72) Inventor: JUANG, Sam, 11494 Taipei City (TW)
(74) Representative: karo IP
(86) International application number: PCT/CN2019/115188
(87) International publication number: WO 2021/082022

(57) **Abstract**

The present invention discloses a method and system for providing portable curriculum vitae, wherein, a user of the first client logs into the server and records the user's curriculum vitae items data via a server, therefore, it can record the different work items on curriculum vitae and no longer need to input the data manually. It's also can sign-off the curriculum vitae data corresponding to the first client through the users of a second client and a third client. In this way, users participate in different projects through the present invention, it can record the curriculum vitae data, let it become the personal curriculum vitae.

## Description

### FIELD OF THE INVENTION

The present invention relates generally to a work management method and system, and more particularly to a method and system for providing portable curriculum vitae.

### BACKGROUND OF INVENTION

In recent years, the thriving recruitment and job-hunting market are boosting human resource agencies. During job hunting, a nicely written curriculum vitae is of great importance. The curriculum vitae gives interviewers from the enterprises a first impression of the interviewee. Therefore, some human resource agencies offer services to teach job hunters how to write the curriculum vitae. People who have just quit jobs and are hunting for new jobs will usually input their personal information manually on the websites of the human resource agencies. In the current human resource matchmaking system, agencies provide matching job vacancies from enterprises or organizations to the job hunters. The job hunters will decide whether or not to apply for the job. Alternatively, agencies can provide matching curriculum vitae of the job hunters to the employers, and the employers review the curriculum vitae and decide whether or not to invite the job hunters for an interview.

When establishing curriculum vitae data, people need to fill in all the information including education level, major subject, accumulated work experience, industry sector of former jobs, expected industry sector, former job titles, expected job titles, personal expertise, professional certification, language abilities and so on, so that the human resource agent system can reorganize the data and conduct matchmaking with the job vacancies of the companies. Through the human resource agent system and based on the conditions preset by the enterprises, a large number of curriculum vitae are screened, leaving only those meeting all the requirements. The curriculum vitae of the matching job hunters are delivered to the enterprises. If there are too few people in the matching list, or, after the interview, the enterprises cannot find qualified people to fill their job vacancies, the only thing they can do is to change their recruitment requirements, for example, to remove some limitations so that more job hunters can meet the requirements.

For example, when the education level is matched, a score of 14 points is set, otherwise the score is set as 0; when the major subject is matched, a score of 10 points is set, otherwise the score is set as 0; when the accumulated work experience is matched, a score of 6 points is set, otherwise the score is set as 0; when the industry sector of former jobs is matched, a score of 28 points is set, otherwise the score is set as -5 points; when the former job category is matched, a score of 22 points is set, otherwise the score is set as -5 points; when the personal expertise is matched, a score of 6 points is set, otherwise the score is set as 0; when the professional certification is matched, a score of 3 points is set, otherwise the score is set as 0; when the language ability is matched, a score of 6 points is set, otherwise the score is set as -5 points. After comparing the extracted data, corresponding results can be obtained and used in the subsequent steps. Based on the above scoring standards, the required talents can be screened out and the data of the qualified talents can be delivered to the corresponding enterprises.

However, the above-mentioned screening method is not of a comprehensive consideration. The job hunters only fill in their curriculum vitae data like former job categories, job titles, and educational background in the systems provided by the agencies. Such data may not actually reflect their overall abilities to suit the jobs. In other words, the curriculum vitae data may not completely record the conditions of education and work experiences of the job hunters. Thus, in order to find suitable talents, the enterprises must assign people to arrange interviews based on the true requirements of the enterprises. The interviews will also take a lot of time. Reviewing the curriculum vitae and interviewing the applicants one by one to find qualified talents still take much time and effort.

### SUMMARY OF THE INVENTION

In view of the above problems, the present invention provides a method and system for providing portable curriculum vitae, enabling users to set up their curriculum vitae data on a server by operating a client device and upload the data to the server. And another client with permission to supervise the curriculum vitae data can log into the server to audit, sign, and evaluate the data. Thus, the users can have portable curriculum vitae, and no longer need to input the data manually.

One object of the present invention is to provide a method and system for providing portable curriculum vitae, which records the user's curriculum vitae data via a server so that the data can be managed by the server, and through which, corresponding users with permission to supervise the data can audit, sign, and evaluate the data, thus offering portable curriculum vitae via the server.

In order to accomplish the above object, one embodiment of the present invention discloses a method for providing portable curriculum vitae, wherein, firstly a first client records the curriculum vitae data on a cloud server, a second client and a third client have the permission to audit and sign the curriculum vitae data; then, after completing a first curriculum vitae item corresponding to the curriculum vitae items data, the first client sends a first completion request to the cloud server; based on the completion request, the cloud server notifies the second client, and the cloud server provides a first checking and signing field according to the curriculum vitae items data; the second client uses a first digital seal on the cloud server to audit and sign the first curriculum vitae item in the first checking and signing field; after completing a second curriculum vitae item corresponding to the curriculum vitae items data, the first client sends a second completion request to the cloud server; the cloud server notifies the third client based on the completion request, and the cloud server provides a second checking and signing field based on the curriculum vitae items data; and, the third client uses a second digital seal on the cloud server to audit and sign the second curriculum vitae item in the second checking and signing field. In this way, through the cloud server, the user can obtain signed and certified curriculum vitae items data in different curriculum vitae items. The data can be used as portable curriculum vitae, saving the effort to repeatedly entering field data to the human resource agent systems. And enterprise interviewers can have more comprehensive understanding of the user's ability and expertise.

In one embodiment provided by the present invention, the cloud server certifies that the second client and the third client belong to a department head or a project supervisor according to a company organization chart or a project plan.

In one embodiment provided by the present invention, the first client further records a time length, a work proceeding, a completion status or a combination thereof in connection with all the work items to the server at the same time.

In one embodiment provided by the present invention, a public key infrastructure (PKI) is used for the digital seal.

In one embodiment provided by the present invention, the curriculum vitae data includes at least one work item record, at least one academic record, one educational level, one major subject, one industry sector of former jobs, one title of former jobs, one personal expertise, one professional certification, one language ability or a combination of two or more conditions.

In one embodiment provided by the present invention, the curriculum vitae items data is transmitted and accessed between the first client and the cloud server via a block chain technology. The second client and the third client audit and sign the first curriculum vitae item and the second curriculum vitae item via the block chain technology.

Another embodiment of the present invention discloses a system for providing a portable curriculum vitae, which comprises: a cloud server, having an account processing unit and a data storage unit; a first server, connected to the cloud server and the data storage unit; a first client, connected to the first server, the first client records curriculum vitae items data in the data storage unit, the curriculum vitae items data contains a first curriculum vitae item and a second curriculum vitae item, and the server provides a first checking and signing field and a second checking and signing field based on the first curriculum vitae item and the second curriculum vitae item; a second client, connected to the first server, the permission of the first client being subordinate to the permission of the second client, and the second client using a first digital seal to audit and sign the first curriculum vitae item in the first checking and signing field based on the completion of the first curriculum vitae item by the first client; a second server, connected to the cloud server and the data storage unit; and a third client, connected to the second server, the permission of the third client being of the same level as that of the second client, and the third client auditing and signing the second curriculum vitae item in the second checking and signing field based on the completion of the second curriculum vitae item by the first client.

In another embodiment provided by the present invention, the server certifies that the second client and the third client belong to a department head or a project supervisor according to a company organization chart or a project plan.

In another embodiment provided by the present invention, the first client further records a time length, a work proceeding, a completion status, or any combination thereof in connection with all the work items to the server at the same time.

In another embodiment provided by the present invention, a public key infrastructure (PKI) is used for the digital seal.

In another embodiment provided by the present invention, the curriculum vitae data includes at least one work item record, at least one academic record, one educational level, one major subject, one industry sector of former jobs, one title of former jobs, one personal expertise, one professional certification, one language ability or a combination of two or more conditions.

In another embodiment provided by the present invention, the curriculum vitae items data is transmitted and accessed between the first client and the cloud server via a block chain technology. The second client and the third client audit and sign the first curriculum vitae item and the second curriculum vitae item via the block chain technology. The curriculum vitae items data, the first digital seal and the second digital seal are transmitted between the first server and the second server via the block chain technology.

### BRIEF DESCRIPTION OF THE DRAWING

Fig. 1 is a flow diagram of one embodiment of the present invention;
Fig. 2 is a system diagram of one embodiment of the present invention;
Fig. 3 is a schematic diagram of the login page of one embodiment of the present invention;
Fig. 4 is a schematic diagram of the login page of one embodiment of the present invention;
Fig. 5 is a schematic diagram of the completion request of one embodiment of the present invention;
Fig. 6 is a schematic diagram of the first signature of one embodiment of the present invention;
Fig. 7 is a schematic diagram of the completion of the fourth record of one embodiment of the present invention;

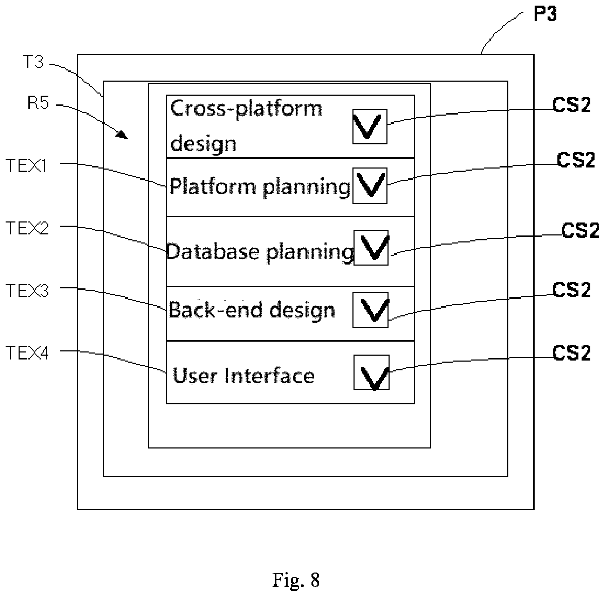

Fig. 8 is a schematic diagram of the second signature of one embodiment of the present invention; and
Fig. 9 is a schematic diagram of the completion of the fifth record of one embodiment of the present invention.

### DETAILED DESCRIPTION OF THE INVENTION

The present invention is described in detail with respect to specific embodiments and with reference to the appended drawings, so that those skilled in the field can better understand the characteristics and efficacy of the present invention.

In the following, various embodiments of the present invention are described in detail based on the drawings. However, the concept of the present invention may be embodied in many different implementations and should not be construed as being limited to the embodiments described herein.

The present invention is a method for providing portable curriculum vitae, which enables the user to put various curriculum vitae items in one document, which, upon auditing and signing by corresponding supervisors, is stored in the cloud server. Thus, the curriculum vitae of the user is complete, and the user no longer needs to enter the records manually, which may often cause omissions.

### Embodiment 1, method for providing portable curriculum vitae

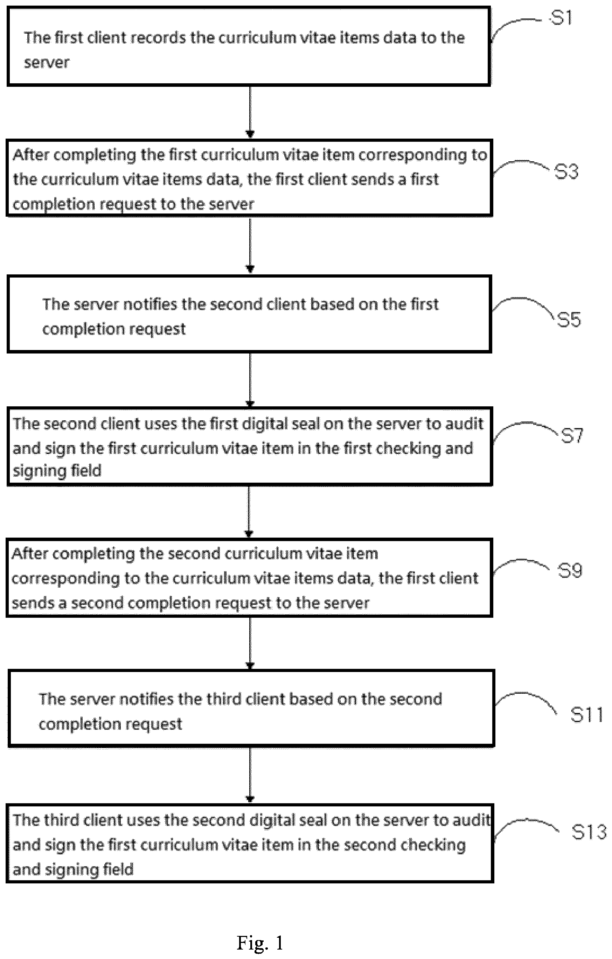

Fig.1 shows the process of one embodiment of the present invention. As shown in the diagram, the method of the present invention for providing portable curriculum vitae includes:
Step S1: the first client records the curriculum vitae items data to the server;
Step S3: after completing the first curriculum vitae item corresponding to the curriculum vitae items data, the first client sends a first completion request to the server;
Step S5: the server notifies the second client based on the first completion request; and
Step S7: the second client uses the first digital seal on the server to audit and sign the first curriculum vitae item in the first checking and signing field;
Step S9: after completing the second curriculum vitae item corresponding to the curriculum vitae items data, the first client sends a second completion request to the server;
Step S11: the server notifies the third client based on the second completion request; and
Step S13: the third client uses the second digital seal on the server to audit and sign the first curriculum vitae item in the second checking and signing field.

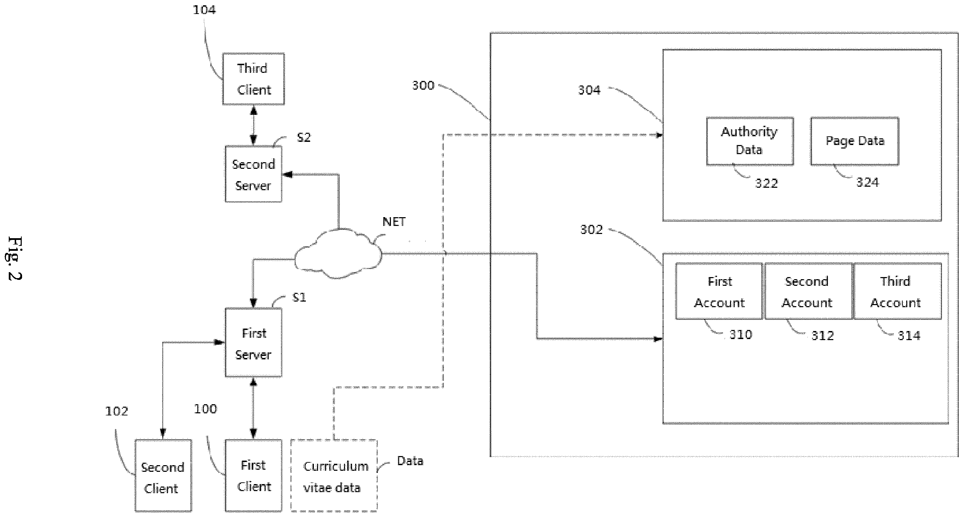

The system needed to execute the method of the present invention for providing portable curriculum vitae is illustrated in Fig. 2. As shown in the diagram, the system for providing portable curriculum vitae system 10 comprises: a first client 100, a second client 102, a third client 104, a network NET and a cloud server 300, wherein the cloud server 300 includes an account processing unit 302 and a data storage unit 304, the account processing unit 302 has a first account 310, a second account 312 and a third account 314. The account processing unit 302 provides permissions to the first client 100 and the second client 102 according to the corresponding permission data 322 stored in the data storage unit 304. The permission of the first client 100 is subordinate to that of the second client 102. The permission of the third client 104 is at the same level as that of the second client 102. The first client 100 and the second client 102 belong to the same legal entity, such as: a company, a consortium, or an association. Hence, the first client 100 and the second client 102 are connected to a first server S1, and connected through the first server S1 to the cloud server 300. The third client 104 belongs to a legal entity different from the first client 100 and the second client 102. Therefore, the third client 104 is connected to a second server S2, and connected through the second server S2 to the cloud server 300.

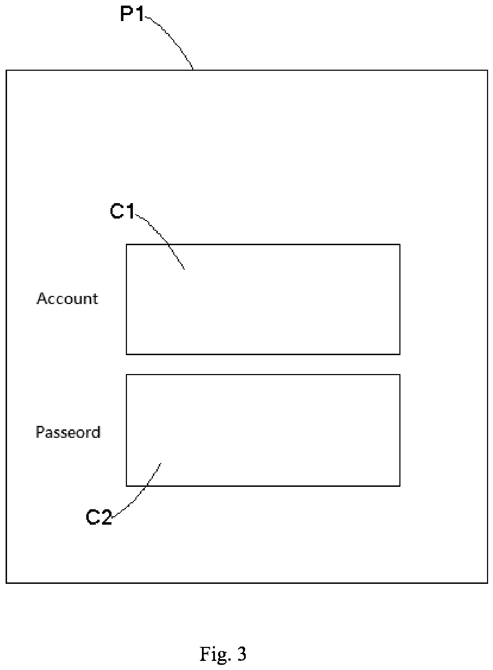

Referring to Fig.3, the first client 100, the second client 102, and the third client 104 are connected to a login page P1 of the cloud server 300 through a network NET. An account name and a password can be entered in the first field C1 and the second field C2, so that they can respectively login to the cloud server 300 through the first account 310, the second account 312, and the third account 314. The cloud server 300 has the first account 310, the second account 312, and the third account 314 stored in the account processing unit 302. The permission and curriculum vitae interface of the first account 310 correspond to the permission data 322 and page data 324 in the data storage unit 304. The first client 100 transmits curriculum vitae items data through the network NET to the cloud server 300.

### Embodiment 2, the process of the method for providing portable curriculum vitae

The following is a description of the process of the method for providing portable curriculum vitae in an embodiment of the present invention. Please refer to Fig. 1 as well as Fig. 2.

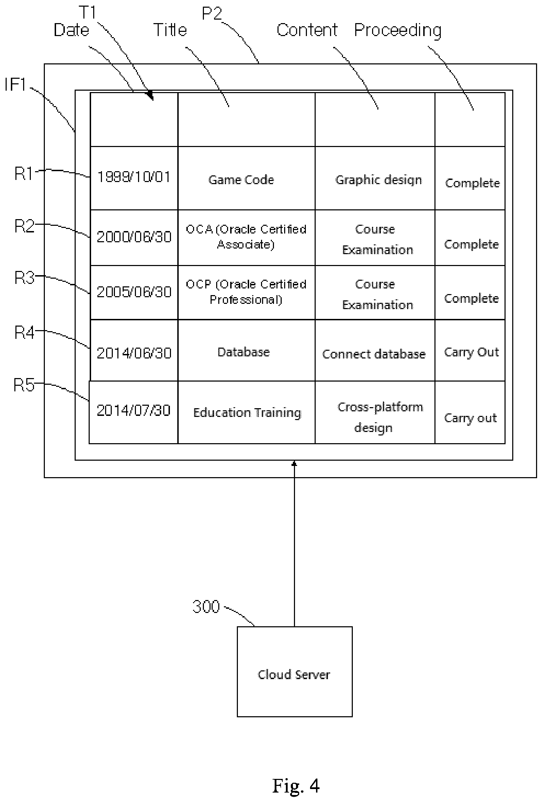

In Step S1, as shown in Fig. 4, the first client 100 continues to enter an action page P2. The cloud server 300 provides a curriculum vitae interface IF1 to the first client 100 based on the first account 310. The curriculum vitae interface IF1 has a form page T1 for the first client 100 to record the curriculum vitae items data of its user. In this embodiment, the form page T1 has a first record R1, a second record R2, and a third record R3. That is, the curriculum vitae items data contains the first record R1, the second record R2, and the third record R3. As shown in Fig.4, for each record, the cloud server 300 generates curriculum vitae data R1-R3 containing date, title, content, and proceeding. In particular, as the first record R1, the second record R2, the third record R3 are all completed performance experiences, the proceeding field is completed and closed. The first client 100 sets up a fourth record R4 and a fifth record R5 on the curriculum vitae interface IF1 and the corresponding interface content will be shown on the curriculum vitae interface IF1. As the fourth record R4 and fifth record R5 are in progress, the proceeding is incomplete and in execution. In particular, in the form page T1, apart from the above-mentioned date, title, content, and proceeding, the time length spent on the work item can be further recorded.

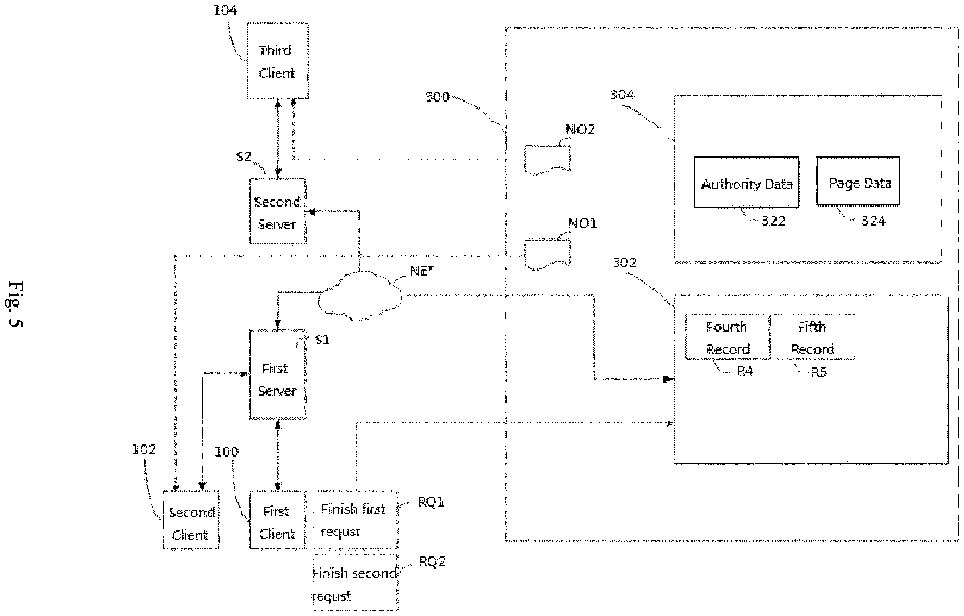

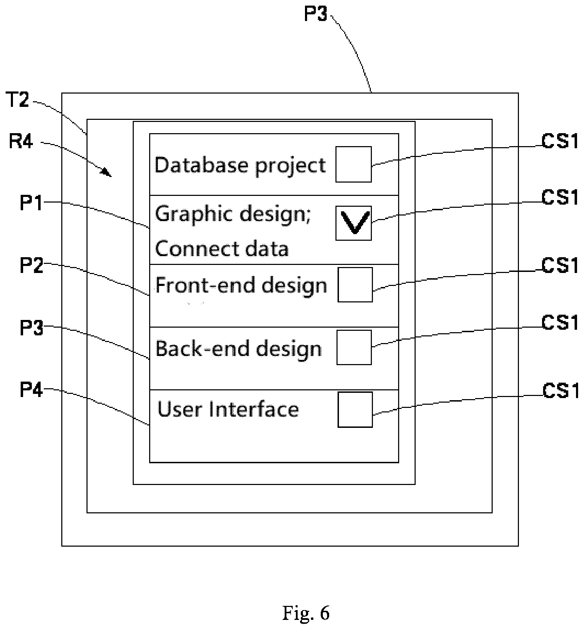

With reference to Fig.4 and Fig.5, in Step S3, the first client 100 uses the first account 310 on the curriculum vitae interface IF1 to send a first completion request RQ1 to the cloud server 300 based on the fourth record R4 on the curriculum vitae interface IF1. Then in Step S5, as shown in Fig.5, the cloud server 300 sends a first notification NO1 to the second client 102 based on the first completion request RQ1. That means, when the second client 102 receives the first completion request RQ1 on the cloud server 300, it will also receive a first notification NO1 that the first client 100 has completed work. The second client 102 has the permission to audit and sign each work item in the database development project P12 on the fourth record R4. Therefore, the second client 102 can audit and sign work items P1 to P4, i.e. audit and sign the fourth record R4. As shown in Fig.6, the cloud server 300 provides a first checking and signing field CS1 for the curriculum vitae item of the first client 100 based on the curriculum vitae items data.

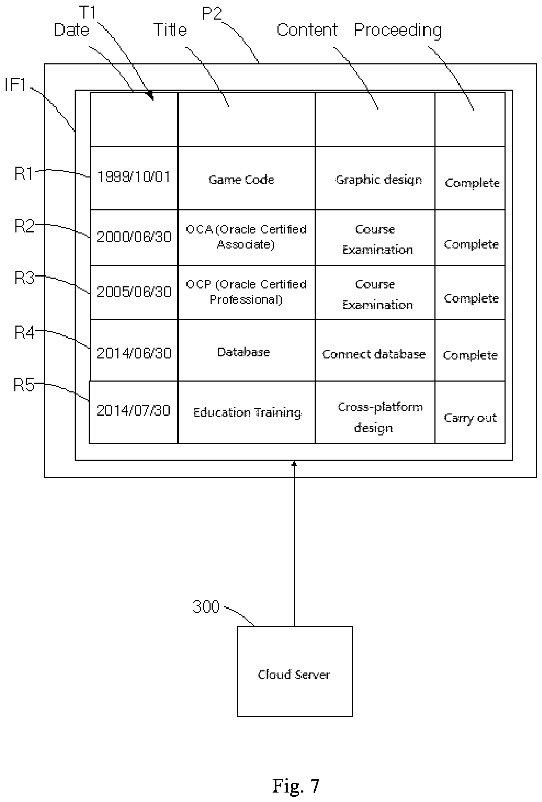

With reference to Fig. 2, Fig. 6, and Fig. 7, in Step S7, the second client 102 accesses a first checklist T2 on the checking page P3 based on the fourth record R4. After confirmation by the second client 102, the platform planning and database connection project P1 in the charge of the first client 100 is completed audited and signed. As a result, the second client 102 audits and signs the fourth record R4 on the cloud server 300, e.g., writing a comment for the work on the fourth record and putting a signature using the digital seal. The comment is a fair indication of the performance of the user of the first client 100 in the curriculum vitae item; as shown in Fig.7, the proceeding of the fourth record R4 is switched to completion. However, as the database development project P12 is in progress, the completion status is shown as in progress instead of closed.

With reference to Fig. 4 and Fig. 5, in Step 9, the first client 100 sends a second completion request RQ2 to the cloud server 300 on the curriculum vitae interface IF1 based on the fifth record R5 of the first account 310 on the curriculum vitae interface IF1. Next, in Step S11, as shown in Fig. 5, the cloud server 300 sends a second notification NO2 to the second completion request RQ2 to the third client 104.

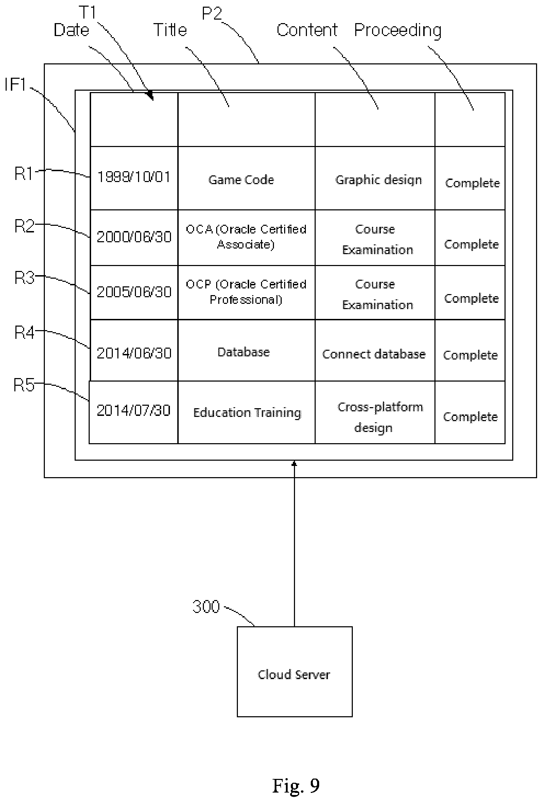

In Step S13, the third client 104 reads a second checklist T3 on the checking page P3 based on the fifth record R5. It is a record of external training of the user of the first client 100 to be audited and signed. As required by the education and training program, all records must be audited and signed to complete the education. Therefore, the user of the first client 100 will not be considered to have completed external education and training until all fields are audited and signed by the third client 104 in the second checking and signing field CS2. As shown in Fig.9, because all items of the external education and training indicated in the fifth record R5 are completed, the proceeding status of the fifth record R5 is shown as closed.

In particular, the above cloud server 300 authenticates the permissions of the first client 100 and the second client 102 on the basis of a company organization chart (not shown in the figure) or a project plan (not shown in the figure). In particular, the supervisory permission of the second client 102 is authenticated to confirm that the second client 102 belongs to the department head or the project supervisor, such as a department manager or a project manager, so that the second client 102 is allowed to audit and sign the first auditing signature field CS1 on the cloud server 300 for the work items of the first client 100. Or, if the third client 104 belongs to an evaluating instructor, the learning status of the first client 100 can be evaluated and signed. A public key infrastructure (PKI) is used for the digital seal.

Further, said embodiment of the present invention can further use block chain technology for data access. That means, the first client 100 and the cloud server 300 transmit and access the curriculum vitae items data via a block chain technology, the second client 102 and the third client 104 use the block chain technology for auditing and signing the first curriculum vitae item and the second curriculum vitae item, and the first server S1 and the second server S2 transfer the curriculum vitae items data, the first digital seal and the second digital seal via the block chain technology.

To sum up, the present invention is a method for providing portable curriculum vitae, which enables the user to establish curriculum vitae data on a server, which can then be audited, signed, and evaluated on the server. In addition, the present invention enables users to login to the server via client having different supervising permissions to audit, sign and evaluate the curriculum vitae data. In this way, the present invention can provide users with portable curriculum vitae, so that users no longer need to spend time writing curriculum vitae when they hunt for new jobs, and enterprises can have better knowledge about the job hunters or employees.

Described above are only preferred embodiments of the present invention and are not intending to limit the scope of the present invention. Therefore, any equal changes and modifications to the shape, structure, characteristics and spirit defined in the claims of the present invention shall be covered in the protection scope of the present invention.

## Claims

1. A method for providing portable curriculum vitae, which comprises:
a first client records the curriculum vitae data on a cloud server, the permission of the first client being subordinate to the permission of the second client; the permission of the third client being of the same level as that of the second client, a second client and a third client have the permission to audit and sign the curriculum vitae data; after completing a first curriculum vitae item corresponding to the curriculum vitae items data, the first client sends a first completion request to the cloud server; the cloud server notifies the second client and the cloud server provides a first checking and signing field according to the curriculum vitae items data; the second client uses a first digital seal on the cloud server to audit and sign the first curriculum vitae item in the first checking and signing field; after completing a second curriculum vitae item corresponding to the curriculum vitae items data, the first client sends a second completion request to the cloud server; the cloud server notifies the third client based on the completion request, the cloud server provides a second checking; and the third client uses a second digital seal on the cloud server to audit and sign the second curriculum vitae item in the second checking and signing field.

2. The method for providing portable curriculum vitae of Claim 1, wherein, the cloud server certifies that the second client and the third client belong to a department head or a project supervisor according to a company organization chart or a project plan.

3. The method for providing portable curriculum vitae of Claim 1, wherein, the first client further records a time length, a work proceeding, a completion status or a combination thereof in connection with all the work items to the server at the same time.

4. The method for providing portable curriculum vitae of Claim 1, wherein, a public key infrastructure(PKI) is used for the digital seal.

5. The method for providing portable curriculum vitae of Claim 1, wherein, the curriculum vitae data includes at least one work item record, at least one academic record, one educational level, one major subject, one industry sector of former jobs, one title of former jobs, one personal expertise, one professional certification, one language ability or a combination of two or more conditions.

6. The method for providing portable curriculum vitae of Claim 1, wherein, the curriculum vitae items data is transmitted and accessed between the first client and the cloud server via a block chain technology; the second client and the third client audit and sign the first curriculum vitae item and the second curriculum vitae item via the block chain technology.

7. A system for providing a portable curriculum vitae, which comprises:
a cloud server, having an account processing unit and a data storage unit; a first server, connected to the cloud server and the data storage unit; a first client, connected to the first server, the first client records curriculum vitae items data in the data storage unit, the curriculum vitae items data contains a first curriculum vitae item and a second curriculum vitae item, and the server provides a first checking and signing field and a second checking and signing field based on the first curriculum vitae item and the second curriculum vitae item; a second client, connected to the first server, the permission of the first client being subordinate to the permission of the second client, and the second client using a first digital seal to audit and sign the first curriculum vitae item in the first checking and signing field based on the completion of the first curriculum vitae item by the first client; a second server, connected to the cloud server and the data storage unit; and a third client, connected to the second server, the permission of the third client being of the same level as that of the second client, and the third client auditing and signing the second curriculum vitae item in the second checking and signing field based on the completion of the second curriculum vitae item by the first client.

8. The system for providing a portable curriculum vitae of Claim 7, wherein, the server certifies that the second client and the third client belong to a department head or a project supervisor according to a company organization chart or a project plan.

9. The system for providing a portable curriculum vitae of Claim 7, wherein, the first client further records a time length, a work proceeding, a completion status, or any combination thereof in connection with all the work items to the server at the same time.

10. The system for providing a portable curriculum vitae of Claim 7, wherein, a public key infrastructure (PKI) is used for the digital seal.

11. The system for providing a portable curriculum vitae of Claim 7, wherein, the curriculum vitae data includes at least one work item record, at least one academic record, one educational level, one major subject, one industry sector of former jobs, one title of former jobs, one personal expertise, one professional certification, one language ability or a combination of two or more conditions.

12. The system for providing a portable curriculum vitae of Claim 7, wherein, the curriculum vitae items data is transmitted and accessed between the first client and the cloud server via a block chain technology. The second client and the third client audit and sign the first curriculum vitae item and the second curriculum vitae item via the block chain technology. The curriculum vitae items data, the first digital seal and the second digital seal are transmitted between the first server and the second server via the block chain technology.
